# EUROPEAN PATENT APPLICATION

(11) **EP 2 813 716 A1**
(43) Date of publication of application: **17.12.2014**
(21) Application number: 14172634.9
(22) Date of filing: 16.06.2014
(51) Int. Cl.: F16C 11/06, F16C 32/04, F16C 9/04, B25J 9/00, B25J 17/02

(54) **Magnetic ball joint**

(30) Priority: 14.06.2013 NL 2010970
(71) Applicant: Penta Robotics Patents B.V., 3633 XX Vreeland (NL)
(72) Inventor: Schuur, Patrick Harmannus, 5658 SE Eindhoven (NL); Dijk, van, Archibald Bastiaan Cornelis, 3633XX Vreeland (NL)
(74) Representative: Verhees, Godefridus Josephus Maria

(57) **Abstract**

A magnetic ball and socket joint 29 has two hinge parts pivotally connected together of which a first hinge part is formed by a ball 17, and the other, second hinge part is provided with a recess in which the ball is rotatable. The ball 17 is exclusively force-locked held in the second hinge part and is made of magnetic material. The second hinge part has a permanent magnet 21 which attracts the ball, as well as a magnetic yoke 31 which increases the magnetic attraction of the ball.

The magnetic yoke 31 is rotationally symmetrical and has a C-shaped cross-section. The permanent magnet 21 is provided within the yoke and in the middle is fixed to the yoke. The ball joint 17 is present between the two opposite ends of the C-shape.

This spherical bearing is suitable for applications where it is desired that the hinge parts separate from each other without damaging in the event that the load on the hinge parts is too great.

## Description

### Field of the invention

The invention relates to a magnetic ball joint comprising two pivotally interconnected hinge members of which a first hinge part is formed by a sphere and the other, second hinge part is provided with a recess in which the ball is rotatable, wherein the ball exclusively force-locked is held in the second hinge portion and made of magnetic material and the second hinge part comprises a permanent magnet which attracts the ball and comprises a magnetic yoke that increases the magnetic attraction of the ball.

### State of the art

A robot which is provided with such a ball joint is known from GB 2289002 A. In this known robot the ball of the pivot is drawn in the recess by a permanent magnet. If the force between the two hinge parts exceeds a certain limit, the ball is drawn against the magnetic attraction out of the recess and the parts to which the hinge parts are attached become separate. The ball joint is therefore as a security device wherein in case of overload no or at least less damage can occur. A disadvantage of this known ball joint is that the hinge parts already separate from each other at relatively low forces. This could be resolved by the application of a stronger permanent magnet. However, by this, the hinge is more costly and/or the weight and the size of the joint increases, which is undesirable in case of use in a robot in which the parts are subject to high accelerations and decelerations.

### Summary of the Invention

An object of the invention is to provide a ball joint of the type described in the preamble in which the hinge parts separate less rapidly without the need for more powerful and thus more expensive and/or large and heavy permanent magnets. To this end, the spherical bearing according to the invention is characterized in that the magnetic yoke is rotationally symmetrical, and has a C-shaped cross-section, wherein the permanent magnet is present within the C -form and in the middle is attached to the yoke and wherein the ball is present between the two opposite ends of the C-shape. By a rotational symmetrical magnetic yoke having a C-shaped cross-section the magnetic attraction force is greater than in the ball joint of the well-known robot without the need for a more powerful magnet. As a result, the two hinge parts during use will separate less easily from each other. Moreover, by this the cost price of the hinge does not or at least not significantly increase.

The invention also relates to a for pick-and-place applications comprising:
- a frame,
- a number of actuators connected to the frame, connected,
- a plurality of arms each having a first end connected to one of the actuators,
- a number of articulated structures which are each connected to the other second end of the arms, and
- at least one carrier, which is connected to at least two of the articulated structures,
- in which the articulated structures are each formed by a parallelogram which is composed of four elements, of which a first element is connected to one of the arms, and a second element, which is present in front of the first element, is connected to the at least one carrier.

As far as the robot, the invention is characterized in that the elements of the articulated structures are connected to each other via magnetic ball joints according to the invention. The magnetic ball joints according to the invention are particularly suitable for use in a robot because in robots in the event that the load on one of the arms or articulated structures becomes too large it is desired that the hinge parts separate from each other without damage, and are able to withstand relatively large forces due to the occurring accelerations and decelerations.

### Brief description of the drawings

Below, the invention will be described in detail with reference to examples shown in the drawings of the robot and the magnetic ball joint according to the invention. In these drawings:
Figure 1 shows an embodiment of the robot provided with ball joints according to the invention;
Figure 2 is a detail of the robot shown in Figure 1;
Figure 3 is an exploded view of a ball joint;
Figure 4 the ball joint of Figure 3 is shown in cross-section;
Figure 5 shows a first embodiment of the spherical bearing of the robot of Figures 1 and 2 in cross-section provided with a magnetic yoke; and
Figure 6 shows a second embodiment of the ball joint of the robot of Figures 1 and 2, in cross-section with an enlarged ball.

### Detailed description of the drawings

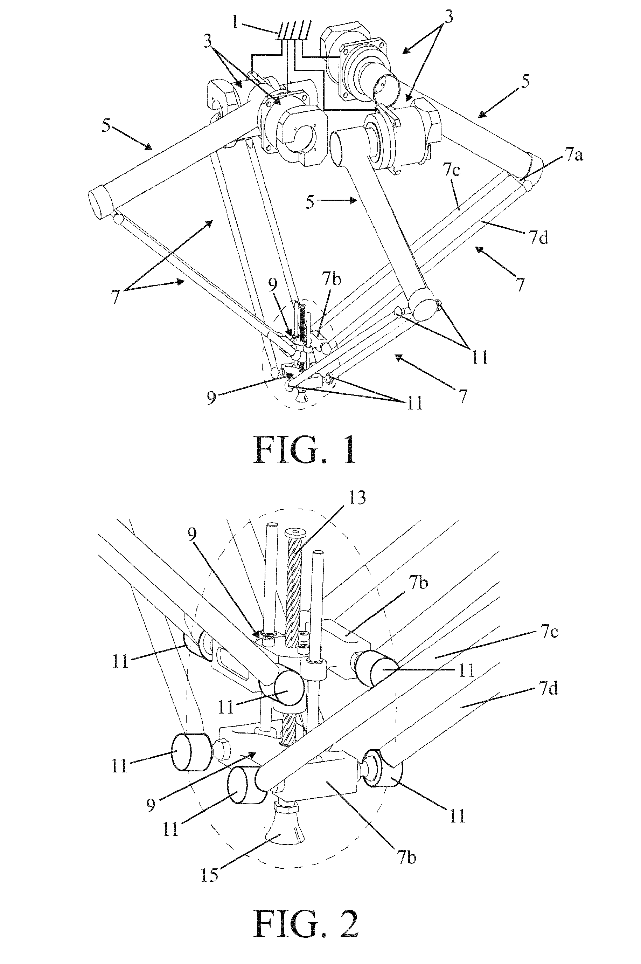

In Figure 1, an embodiment of the robot provided with ball joints according to the invention is shown. The robot shown in Figure 1 is designed for pick-and-place applications, and has a frame 1 which is schematically shown. Four actuators 3 are fixed to the frame. Arms 5 are connected with a first end 5a to the actuators and articulated structures 7 are attached to second ends 5b of said arms.

Each articulated structure is formed by a parallelogram composed of four elements. Of these, a first element 7a is attached to one of the arms, and a second element 7b, which is present in front of the first element, is attached to a carrier 9. A third and fourth element 7c and 7d of the articulated structure are parallel to each other and connected to the first and second elements via ball joints 11.

For illustration, in Figure 2 the robot is shown in detail at the position of the carriers 9. Each carrier 9 is provided with a hole through which a screw spindle 13 extends. This screw spindle is mounted in the lower hole and fixed in the axial direction. The upper hole is provided with internal transport thread. By moving the carriers 9 to each other or away from each other, the screw spindle 13 is rotated as well as the suction cup 15 attached to the bottom of the screw spindle.

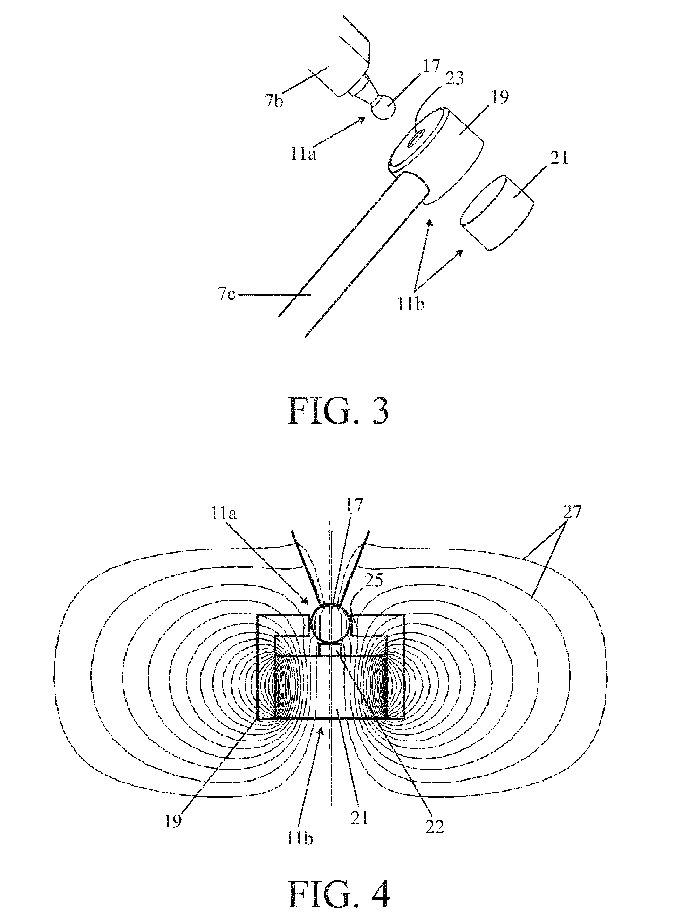

In Figure 3 an exploded view of a ball joint is shown. The ball joint 11 has two pivotally interconnected hinge members of which a first hinge portion 11a is formed by a ball 17, and the other, second hinge part 11b is formed by a non-magnetic housing 19 including a cylindrical permanent magnet 21. The housing 19 is formed by a cylinder which is open at the bottom and closed at the top and is provided with a recess 23 in the upper side. The magnet 21 is present in the housing 19 and closes off the bottom.

In Figure 4, the ball joint of Figure 3 is shown in cross-section. The ball 17 is made of magnetic material, and is attracted by the magnet 21. The housing 19 is of non-magnetic material, and keeps the ball within the bounding wall 25 of the recess in which the ball is rotatable. The ball 17 is exclusively force-locked held in the second hinge portion 11b. Between the magnet 21 and the ball 17 there is a spacer 22 of non-magnetic material against which the ball is attracted. In addition, when in use, the ball will be in contact with the boundary wall of the recess 23 at one place.

In this figure, the magnetic field lines 27 are shown. From this it can be seen that only a small portion of the magnetic flux passes through the ball 17 and therefore the magnetic attraction force is small.

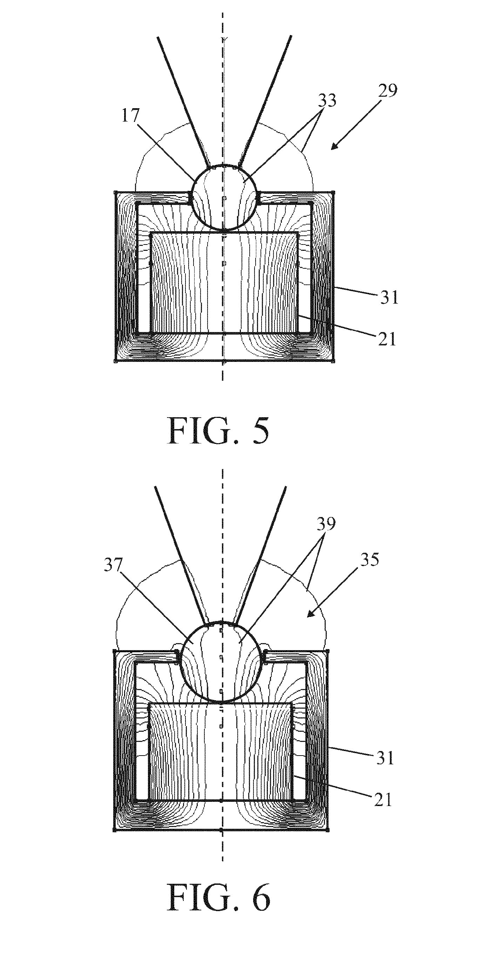

In Figure 5 a first embodiment of the spherical bearing of the robot of Figures 1 and 2 is shown in cross-section. All parts that are equal to that of the ball joint 4 shown in the figures 3 and 4 shown are denoted with the same reference numerals. The housing 31 of this ball joint 29 is of magnetic material and the housing forms a magnetic yoke that conducts the magnetic flux.

The magnetic yoke is rotationally symmetric and has a C-shaped cross-section. The permanent magnet 21 is located in the C-shape and is secured to the yoke in the middle of it. The yoke together with the permanent magnet has a ω-shaped cross section, wherein the magnet forming the core. As seen in this cross-section is, the ball is present between the two opposite ends of the C-shape.

The ball 17 is drawn against the permanent magnet 21 and will also be in contact with the boundary wall of the recess 23 at one place.

From the course of the magnetic field lines 33 can be inferred that the magnetic attraction force is greater than in the first embodiment of the ball joint 11.

Figure 6 shows a second embodiment of the ball joint of the robot shown in Figures 1 and 2 in cross-section. All parts which are equal to those of the second embodiment are designated with the same reference numerals. This ball joint 35, the housing 31 is also made of magnetic material and the housing forms a magnetic yoke that conducts the magnetic flux. The ball 37 is enlarged in this embodiment so that more magnetic field lines 39 pass through the ball and the magnetic attraction is even greater than in the second embodiment.

The magnetic ball joints according to the invention are particularly suitable for application in situations in which it is desired that the hinge parts separate from each other without damaging in the event that the load on the hinge parts is too great.

Albeit the invention has been described in the foregoing based on the drawings, it should be observed that the invention is not by any manner or means restricted to the embodiment shown in the drawings. The invention also extends to all embodiments deviating from the embodiment shown in the drawings within the scope defined by the claims.

## Claims

1. A magnetic ball joint (11, 29, 35) comprising two pivotally interconnected hinge members (11a, 11b) of which a first hinge part (11 a) is formed by a sphere (17, 37) and the other, second hinge part (11b) is provided with a recess (23) in which the ball is rotatable, wherein the ball exclusively force-locked is held in the second hinge portion and made of magnetic material and the second hinge part (11b) comprises a permanent magnet (21) which attracts the ball and comprises a magnetic yoke (31) that increases the magnetic attraction of the ball (17, 37), **characterized in that** the magnetic yoke (31) is rotationally symmetrical, and has a C-shaped cross-section, wherein the permanent magnet (21) is present within the C -form and in the middle is attached to the yoke and wherein the ball (17, 37) is present between the two opposite ends of the C-shape.

2. Robot for pick-and-place applications comprising:
- a frame (1),
- a number of actuators connected to the frame (3), connected,
- a plurality of arms (5) each having a first end (5a) connected to one of the actuators,
- a number of articulated structures (7) which are each connected to the other second end (5b) of the arms, and
- at least one carrier (9), which is connected to at least two of the articulated structures,
- in which the articulated structures (7) are each formed by a parallelogram which is composed of four elements, of which a first element (7a) is connected to one of the arms, and a second element (7b), which is present in front of the first element, is connected to the at least one carrier,
**characterized in that** the elements (7a-7d) of the articulated structures (7) are connected to each other via magnetic ball joints (11, 29, 35) according to claim 1.
